# EUROPEAN PATENT SPECIFICATION

(11) **EP 4 217 101 B1**
(45) Date of publication and mention of the grant of the patent: **11.11.2026**
(21) Application number: 21790961.3
(22) Date of filing: 24.09.2021
(51) Int. Cl.: B01J 4/00, B01J 8/00, B01J 8/06

(54) **ROTATABLE RETAINING DEVICE FOR TUBULAR REACTORS**
DREHBARE HALTEVORRICHTUNG FÜR ROHRREAKTOREN
DISPOSITIF DE RETENUE TOURNANT POUR RÉACTEURS TUBULAIRES

(30) Priority: 25.09.2020 GB 202015189
(43) Date of publication of application: 02.08.2023
(73) Proprietor: Johnson Matthey Davy Technologies Limited, London EC2V 7AD (GB)
(72) Inventor: BAKER, Robert Miles, London W2 6LG (GB); CLAXTON, Henry Arthur, London W2 6LG (GB); GRAHAM, Simon, London W2 6LG (GB); SHAW, Dean Graham, London W2 6LG (GB)
(74) Representative: Honeywell CT
(86) International application number: PCT/GB2021/052490
(87) International publication number: WO 2022/064211

(56) References cited:
- CN-U- 208 010 960
- DD-A1- 268 630
- FR-A1- 2 166 167
- US-A1- 2014 348 712
- US-B1- 6 190 624

## Description

The present disclosure relates to improvements in or relating to tubular reactors. In particular, the present disclosure relates to retaining devices for use with reactor tubes of tubular reactors.

### Background

Conventional, so-called fixed bed, tubular reactors comprise a reactor shell containing a plurality of reactor tubes, which are usually cylindrical, and which are usually directly filled with catalyst particles. In use, a heat transfer medium flows through the shell of the reactor outside these reactor tubes and thereby adjusts the temperature of the catalyst in the reactor tubes by heat exchange across the tube wall. Thus, where the reaction is an exothermic reaction, the heat transfer medium will allow heat to be removed from the catalyst and where the reaction is an endothermic reaction, the heat transfer medium will provide heat to the catalyst.

For some reactions, the heat effects of the reaction are moderate such that they are either not problematic or they can be readily managed. In some cases, the heat effects are sufficiently small that large-diameter reactor tubes may be used. This has the benefit that there is a large volume of catalyst within the reactor tube.

However, for more exothermic or endothermic reactions it is necessary that there is efficient heat transfer via the tube wall to the heat transfer medium to enable the conditions within the reactor to be controlled in order to maintain a stable operating temperature to avoid detrimental effects occurring. Such effects, for exothermic reactions, may include side reactions taking place, damage to the catalyst such as by sintering of the catalytic active sites, and, in a worst case, thermal runaway. Detrimental effects for endothermic reactions may include quenching of the reaction.

To achieve the desired efficiency, the surface area of the tube wall per unit length has to be maximised. This has in the past been achieved by installing a greater number of smaller diameter reactor tubes. In some reactions, the size restriction means that the reactor tubes are only of the order of about 15 to 40 mm internal diameter. However, the use of this multiplicity of reactor tubes increases the cost and complexity of the reactor.

Thus, in an attempt to mitigate these problems an alternative approach has been developed, in particular for more exothermic or endothermic reactions, in which the catalyst is not directly packed into the reactor tubes but is instead contained in a plurality of catalyst carriers that are configured to sit within the reactor tube.

A first type of such a catalyst carrier is described in WO2011/048361. This arrangement seeks to optimise heat transfer at the tube wail such that larger tubes and larger volumes of smaller catalyst particles can be used, even for more exothermic or endothermic reactions. The catalyst carrier described in WO 2011/048361 comprises an annular container for holding catalyst in use. The container has a perforated inner wall defining a tube, a perforated outer wall, a top surface closing the annular container and a bottom surface dosing the annular container. The surface closing the bottom of the tube is formed by the inner wall of the annular container. A skirt extends upwards from the perforated outer wall of the annular container from a position at or near the bottom surface of the container to a position below the location of a seal. A seal is located at or near the top surface and extends from the container by a distance which extends beyond an outer surface of the skirt.

A second type of such a catalyst carrier is described in WO2012/136971. In this arrangement, the catalyst carrier comprises a container for holding a monolith catalyst in use, said container having a bottom surface closing the container and a skirt extending upwardly from the bottom surface of said container to a position below the location of a seal and spaced therefrom, said skirt being positioned such that there is a space between an outer surface of the monolith catalyst and the skirt; and a seal located at or near a top surface of the monolith catalyst and extending from the monolith catalyst by a distance which extends beyond an outer surface of the skirt.

A third type of such a catalyst carrier is described in WO2016/050520. In this arrangement, the catalyst carrier comprises a container for holding catalyst in use. The container has a bottom surface closing the container and a top surface. A carrier outer wall extends from the bottom surface to the top surface and a seal extends from the container by a distance which extends beyond the carrier outer wall. The carrier outer wall has apertures located below the seal.

US6190624, US2014348712, FR2166167, CN208010960U and DD268630 disclose devices for loading/unloading material from reactors or vessels.

To prevent loss of containment of particulate catalyst from the reactor tubes, various means have been provided that typically include a mesh or grill that may be held permanently in place by resilient means or frameworks attached to or located below the lower tube sheet. For catalyst carriers, a support grid has been used as a retaining system that is bolted together within the reactor and fixed to the lower tube sheet via studs and bolts.

With both fixed bed tubular reactors and those configured to receive catalyst contained in catalyst carriers there may be a need to empty the reactor tubes of catalyst. This need may arise, for example, because the catalyst has degraded over time and requires replacement. Degradation may be physical, for example due to processes such as fracturing of the catalyst caused by repeated expansion and contraction of the tubes, or chemical, for example due to poisoning of the catalyst. This need may also arise from a requirement to carry out periodic inspection or maintenance on the tubular reactor.

Emptying the reactor tubes of catalyst can be a labour-intensive, hazardous and time-consuming process. Tubular reactors may comprise a large number of reactor tubes. Each reactor tube may comprise a significant volume of catalyst or a large number of catalyst carriers. Down time of the tubular reactor may result in significant costs in terms of lost production time. In addition, controlled discharge of the particulate catalyst or catalyst carriers may not be possible or easy to achieve using known retention systems.

For all these reasons it would be desirable to provide a way of improving the process of emptying the reactor tubes of catalyst. In particular, it would be desirable to facilitate discharge of catalyst from the reactor on a tube-by-tube basis in a fast and controllable manner.

### Summary of the disclosure

In a first aspect of the present disclosure there is provided a reactor tube for a tubular reactor and a retaining device associated with the reactor tube;
the reactor tube in the form of an elongate tube defining a bore for receiving in use a catalyst and having an outlet at one end of the bore for discharging the catalyst out of the bore;
the retaining device being configured to be rotatable between a first position and a second position;
wherein in the first position the retaining device at least partially obstructs the outlet for retaining the catalyst within the bore; and
in the second position the outlet is unobstructed sufficiently for permitting discharge of the catalyst out of the outlet,
wherein the retaining device is rotatable about an axis that is parallel to, and non-coincident with, a longitudinal axis of the elongate tube.

Advantageously, the retaining device may provide an improved means for emptying the reactor tube of catalyst.

The retaining device is rotatable about an axis that is parallel to, and non-coincident with, a longitudinal axis of the elongate tube.

The retaining device may comprise a rotatable body that is rotatable between the first position and the second position.

The rotatable body may comprise at least one obstructing portion and at least one non-obstructing portion arranged at different circumferential regions of the rotatable body;
wherein in the first position the at least one obstructing portion may be configured to at least partially obstruct the outlet and in the second position the at least one non-obstructing portion may be configured to align with the outlet.

The rotatable body may comprise a central pivot about which the rotatable body is configured to rotate.

In some embodiments the rotatable body may comprise a rotatable disc.

The rotatable disc may comprise a disc body and at least one aperture;
wherein in the first position the disc body may be configured to at least partially obstruct the outlet for retaining the catalyst within the bore and in the second position the at least one aperture may be configured to align with the outlet.

The at least one aperture may be an at least one open aperture that extends to a periphery of the disc body to define at least one cut-out segment of the rotatable disc.

In some embodiments the or each cut-out segment of the rotatable disc may be lens-shaped.

In some embodiments the disc body may be lune-shaped.

The rotatable body may comprise one, two, three or four apertures. This may be particularly the case where the retaining device is intended to control discharge of the catalyst from one, two, three or four outlets.

In some embodiments the rotatable body may comprise an arm or lobe or lobe;
wherein in the first position the arm or lobe or lobe may be configured to at least partially obstruct the outlet for retaining the catalyst within the bore and in the second position the arm or lobe or lobe may be configured to be non-aligned with the outlet.

In some embodiments the rotatable body may comprise two, three or four arms or lobes or lobes. This may be particularly the case where the retaining device is intended to control discharge of the catalyst from two, three or four outlets.

In some embodiments the bore may be configured to receive in use the catalyst in the form of a plurality of catalyst carriers that contain the catalyst and are insertable into the bore;
wherein in the first position the retaining device may at least partially obstruct the outlet so as to retain the plurality of catalyst carriers within the bore; and
in the second position the outlet may be unobstructed sufficiently so as to permit discharge of the plurality of catalyst carriers out of the outlet.

In the first position the retaining device may be configured to support an endmost one of the plurality of catalyst carriers.

In the first position the retaining device:
may directly support the endmost one of the plurality of catalyst carriers by contacting the endmost one of the plurality of catalyst carriers; or
may indirectly support the endmost one of the plurality of catalyst carriers by contacting a supporting device that itself supports the endmost one of the plurality of catalyst carriers.

In some other embodiments the bore may be configured to receive in use the catalyst in the form of catalyst particles that are filled loose into the bore;
wherein in the first position the retaining device may at least partially obstruct the outlet so as to retain the catalyst particles within the bore; and
in the second position the outlet may be unobstructed sufficiently so as to permit discharge of the catalyst particles out of the outlet.

The reactor tube and retaining device may further comprise a supporting device that supports the catalyst particles within the bore;
wherein in the first position the retaining device may at least partially obstruct the outlet so as to retain the supporting device and hence the catalyst particles within the bore; and
in the second position the outlet may be unobstructed sufficiently so as to permit discharge of the supporting device and thereafter the catalyst particles out of the outlet.

The supporting device may take any suitable form. For example, the supporting device may comprise a hollow or porous body with at least an upper mesh for supporting the particulate catalyst. Alternatively, the supporting device may comprise an inert support material. The inert supporting material may comprise inert balls, for example alumina balls, which have a larger diameter than the particulate catalyst. The inert balls may be graded in size to avoid loss of catalyst from the reactor tube. Alternatively, the supporting device may comprise one or more coiled springs which expand against the reactor tube wall to retain the particulate catalyst like a basket.

In a second aspect of the present disclosure there is provided a tubular reactor comprising a plurality of reactor tubes and a plurality of retaining devices;
each reactor tube comprising an elongate tube defining a bore for receiving in use a catalyst and having an outlet at one end of the bore for discharging the catalyst out of the bore;
each retaining device being associated with one or more reactor tubes and being configured to be rotatable between a first position and a second position;
wherein in its first position each retaining device at least partially obstructs the outlet of one, some or all of its one or more associated reactor tubes for retaining the catalyst within the bore of one, some or all of its one or more associated reactor tubes; and
in its second position the outlet of at least one of its one or more associated reactor tubes is unobstructed sufficiently for permitting discharge of the catalyst out of said outlet,
wherein each retaining device is rotatable about an axis that is parallel to, and non-coincident with, the longitudinal axes of the elongate tubes.

In its first position each retaining device may at least partially obstruct the outlet of all of its one or more associated reactor tubes for retaining the catalyst within the bore of all of its one or more associated reactor tubes.

In its second position the outlet of at least two or all of its one or more associated reactor tubes may be unobstructed sufficiently for permitting discharge of the catalyst out of said outlets.

Each reactor tube may have two, three or four retaining devices associated with its outlet.

In some embodiments the plurality of retaining devices may each be rotatable independently of each other.

In some other embodiments two or more of the plurality of retaining devices may be interlinked to be rotatable synchronously.

The two of more retaining devices may be interlinked by a link member, wherein the link member may be actuatable to rotate the two or more retaining devices.

The plurality of reactor tubes may be arranged in an equi-spaced regular pattern with each pair of reactor tubes being separated by a centre-to-centre uniform distance, D;
the plurality of retaining devices may also arranged in an equi-spaced regular pattern with each pair of retaining devices being separated by the centre-to-centre uniform distance, D; and
the equi-spaced regular pattern of the retaining devices may be offset from the equi-spaced regular pattern of reactor tubes.

Each retaining device may be aligned at an interstice between two, optionally between three or four reactor tubes.

Each retaining device is rotatable about an axis that is parallel to, and non-coincident with, the longitudinal axes of the elongate tubes.

Each retaining device may comprise a rotatable body that is rotatable between its first position and its second position.

Each rotatable body may comprise at least one obstructing portion and at least one non-obstructing portion arranged at different circumferential regions of the rotatable body;
wherein in its first position the at least one obstructing portion may be configured to at least partially obstruct the outlet of one, some or all of its one or more associated reactor tubes and in its second position the at least one non-obstructing portion may be configured to align with the outlet of one, some or all of its one or more associated reactor tubes.

Each rotatable body may comprise a central pivot about which the rotatable body is configured to rotate.

In some embodiments each rotatable body may comprise a rotatable disc.

The rotatable disc may comprise a disc body and at least one aperture;
wherein in its first position the disc body may be configured to at least partially obstruct the outlet of one, some or all of its one or more associated reactor tubes and in its second position the at least one aperture may be configured to align with the outlet of one, some or all of its one or more associated reactor tubes.

The at least one aperture may be an at least one open aperture that extends to a periphery of the disc body to define at least one cut-out segment of the rotatable disc.

The or each cut-out segment of the rotatable disc may be lens-shaped.

Each disc body may be lune-shaped.

Each rotatable body may comprise one, two, three or four apertures. This may be particularly the case where the retaining device is intended to control discharge of the catalyst from one, two, three or four outlets.

Each rotatable body may comprise an arm or lobe or lobe;
wherein in the first position the arm or lobe or lobe may be configured to at least partially obstruct the outlet of one, some or all of its one or more associated reactor tubes and in the second position the arm or lobe or lobe may be configured to be non-aligned with the outlet of one, some or all of its one or more associated reactor tubes.

In its first position the arm or lobe or lobe may extend across two or more associated reactor tubes.

The arm or lobe may be straight or curved.

Each rotatable body may comprise two, three or four arms or lobes. This may be particularly the case where the retaining device is intended to control discharge of the catalyst from two, three or four outlets.

The tubular reactor may further comprise a tube sheet supporting the plurality of reactor tubes wherein the plurality of retaining devices may be mounted to the tube sheet.

In some embodiments the plurality of retaining devices may be mounted to stud bolts of the tube sheet.

In some embodiments the tube sheet may be a lower tube sheet.

The tubular reactor may further comprise a plurality of locking elements for selectively preventing rotation of the retaining devices.

Each locking element may comprise a locking body that can be engaged against one or more retaining devices to block rotation of said retaining devices.

In some embodiments each bore may be configured to receive in use the catalyst in the form of a plurality of catalyst carriers that contain the catalyst and are insertable into the bore;
wherein in its first position each retaining device may at least partially obstruct the outlet of one, some or all of its one or more associated reactor tubes so as to retain the plurality of catalyst carriers within the bore of one, some or all of its one or more associated reactor tubes; and
in its second position the outlet of at least one of its one or more associated reactor tubes may be unobstructed sufficiently for permitting discharge of the plurality of catalyst carriers out of said outlet.

In its first position each retaining device may be configured to support an endmost one of the plurality of catalyst carriers.

In its first position each retaining device:
may directly support the endmost one of the plurality of catalyst carriers by contacting the endmost one of the plurality of catalyst carriers; or
may indirectly support the endmost one of the plurality of catalyst carriers by contacting a supporting device that itself supports the endmost one of the plurality of catalyst carriers.

The supporting device may be pushed or placed first into the reactor tube followed by the plurality of catalyst carriers.

In some other embodiments each bore may be configured to receive in use the catalyst in the form of catalyst particles that are filled into the bore;
wherein in its first position each retaining device may at least partially obstruct the outlet of one, some or all of its one or more associated reactor tubes so as to retain the catalyst particles within the bore of one, some or all of its one or more associated reactor tubes; and
in its second position the outlet of at least one of its one or more associated reactor tubes may be unobstructed sufficiently so as to permit discharge of the catalyst particles out of said outlet.

In some embodiments the tubular reactor may further comprise a plurality of supporting devices that support the catalyst particles within the bores;
wherein in its first position each retaining device may at least partially obstruct the outlet of one, some or all of its one or more associated reactor tubes so as to retain a supporting device and hence the catalyst particles within the bore of one, some or all of its one or more associated reactor tubes; and
in the second position the outlet of one, some or all of its one or more associated reactor tubes may be unobstructed sufficiently so as to permit discharge of the supporting device and thereafter the catalyst particles out of said outlet or outlets.

In a third aspect of the present disclosure there is provided a method of loading and unloading catalyst into and out of a reactor tube of a tubular rector, the reactor tube comprising an elongate tube defining a bore for receiving a catalyst and having an outlet at one end of the bore for discharging the catalyst out of the bore, the method of loading comprising:
associating with the outlet of the reactor tube a retaining device wherein the retaining device is rotatable about an axis that is parallel to, and non-coincident with, the longitudinal axis of the elongate tube;
rotating the retaining device into a first position in which it at least partially obstructs the outlet;
loading the catalyst into the reactor tube such that they are retained and supported by the retaining device;
the method of unloading comprising:
   rotating the retaining device into a second position in which the outlet is sufficiently unobstructed; and
   discharging the catalyst out of the outlet.

Two or more retaining devices may be associated with the outlet of the reactor tube; and the method of loading may comprise:
rotating each of the two or more retaining devices into their first position in which they at least partially obstruct the outlet;
loading the catalyst into the reactor tube such that it is retained and supported by the retaining devices;
the method of unloading may comprise:
   rotating each of the two or more retaining devices into their second position in which the outlet is sufficiently unobstructed; and
   discharging the catalyst out of the outlet.

The tubular reactor may comprise a plurality of reactor tubes and a plurality of retaining devices; and the method of loading may comprise:
rotating each retaining device into its first position in which it at least partially obstructs the outlet of at least one reactor tube;
loading the catalyst into the reactor tubes such that they are retained and supported by the retaining devices;
the method of unloading may comprise:
   rotating one or more of the retaining devices into its second position such that the outlet of at least one of the reactor tubes is sufficiently unobstructed; and
   discharging the catalyst out of said outlet or outlets.

In some embodiments the reactor tubes may be unloaded one at a time by selectively rotating the retaining devices to sufficiently unobstruct the outlet of only one reactor tube at a time.

In some other embodiments the reactor tubes may be unloaded two or more at a time by selectively rotating the retaining devices to sufficiently unobstruct the outlets of two or more reactor tubes at the same time.

In some embodiments the catalyst may be loaded into each bore by providing the catalyst in a plurality of catalyst carriers and loading the plurality of catalyst carriers into each bore.

In some other embodiments the catalyst may be loaded into each bore by filling loose catalyst particulate into each bore.

The tubular reactors, reactor tubes and retaining devices disclosed in this specification may be used for a wide range of processes. Examples of suitable processes include reactors for exothermic reactions such as reactions for the production of methanol, reactions for the production of ammonia, methanation reactions, water-gas shift reactions, oxidation reactions such as the formation of formaldehyde, maleic anhydride and ethylene oxide, Fischer-Tropsch reactions, and the like. Endothermic reactions such as pre-reforming, steam reforming, dehydrogenation and the like may also be carried out in reactors including the catalyst carriers of the present disclosure.

The tubular reactors, reactor tubes and retaining devices of the present disclosure may advantageously allow catalyst to be used in medium to highly exothermic or endothermic reactions.

The catalyst of the present disclosure may be provided, for example, as loose catalyst particles or as a catalyst monolith or catalyst particles or monoliths contained within a catalyst carrier. The catalyst may be provided as a single bed of catalyst or multiple beds of catalyst. The catalyst carrier may be configured to promote axial and or radial flow through the catalyst. In some embodiments the catalyst carrier may be configured to preferentially promote radial flow through the catalyst.

### Brief description of the drawings

Embodiments of the present disclosure will now be described, by way of example only, with reference to the accompanying drawings, in which:
Figure 1 is a schematic view of a tubular reactor;
Figure 2 is a schematic view of a portion of a reactor tube containing catalyst carriers;
Figure 3 is a schematic view of a portion of another reactor tube containing catalyst;
Figure 4 is a schematic view of a portion of another reactor tube containing catalyst and a supporting device;
Figure 5 is a schematic view of a portion of a tubular reactor;
Figure 6 is a schematic end view of a reactor tube and three retaining devices in a first position;
Figure 7 shows the arrangement of Figure 6 with the retaining devices in a second position;
Figure 8 is a schematic end view of a plurality of reactor tubes and retaining devices;
Figure 9 is a schematic end view of a plurality of reactor tubes and a plurality of retaining devices of a different type;
Figure 10 is a cross-sectional view of a catalyst carrier;
Figure 11 is an exploded perspective view of the catalyst carrier of Figure 10; and
Figure 12 is a perspective view of the catalyst carrier of Figure 10.

### Detailed description

In the following, aspects and embodiments of the present disclosure will be described, by way of example only, with reference to a vertically-orientated tubular reactor having a plurality of vertical reactor tubes extending between an upper tube sheet and a lower tube sheet. However, it will be understood that the present disclosure may also be applied to other configurations of tubular reactor that may adopt other orientations.

Additionally, in this specification any reference to orientation, for example terms such as top, bottom, upper, lower, above, below and the like have, is used with regard to the orientation of the parts as illustrated in the drawings being referenced but is not to be seen as restrictive on the potential orientation of such parts in actual use. For example, a part described as being orientated vertically may also be orientated horizontally.

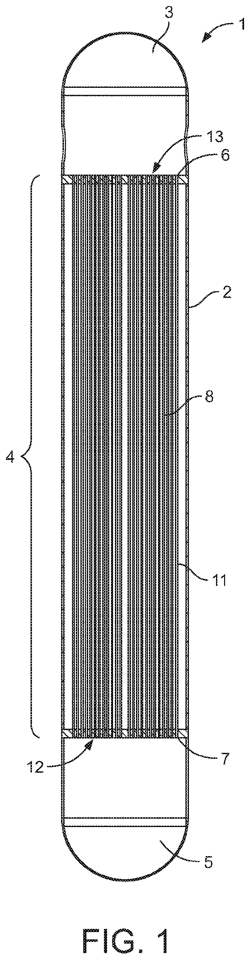

Figure 1 shows a typical layout of a tubular reactor 1 of the present disclosure. The tubular reactor 1 comprises a housing 2. The interior of the housing may be divided into a head space 3, a heat exchange zone 4 and a footer space 5 by two tube sheets - an upper tube sheet 6 and a lower tube sheet 7. The upper tube sheet 6 separates the head space 3 from the heat exchange zone 4. The lower tube sheet 7 separate the footer space 5 from the heat exchange zone 4.

A plurality of reactor tubes 8 extend between the upper tube sheet 6 and the lower tube sheet 7. Each reactor tube 8 comprises an elongate tube defining a bore 11 and has an outlet 12 at one end of the bore 11. The outlet 12 may be at the lower end of the reactor tube 8. An inlet 13 of the reactor tube 8 may be provided at an opposed end of the reactor tube 8, for example at an upper end.

A large number of reactor tubes 8 may be provided, for example between 20 and 80,000 reactor tubes 8 may be present. The bore 11 of each reactor tube 8 may have, for example, an internal diameter of between 20 and 150 mm. In some embodiments the internal diameter may be about 85 mm.

Each reactor tube 8 is intended to receive in use a catalyst 9 within its bore 11. The catalyst 9 may be loose or may be packaged in various forms.

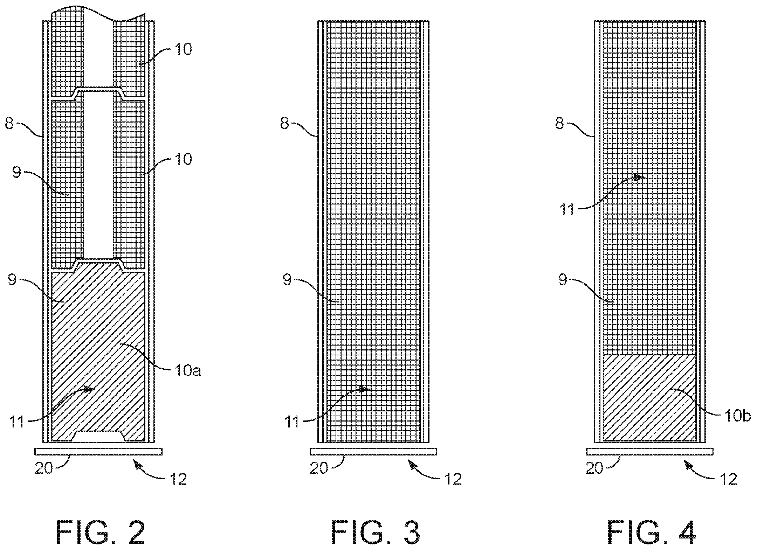

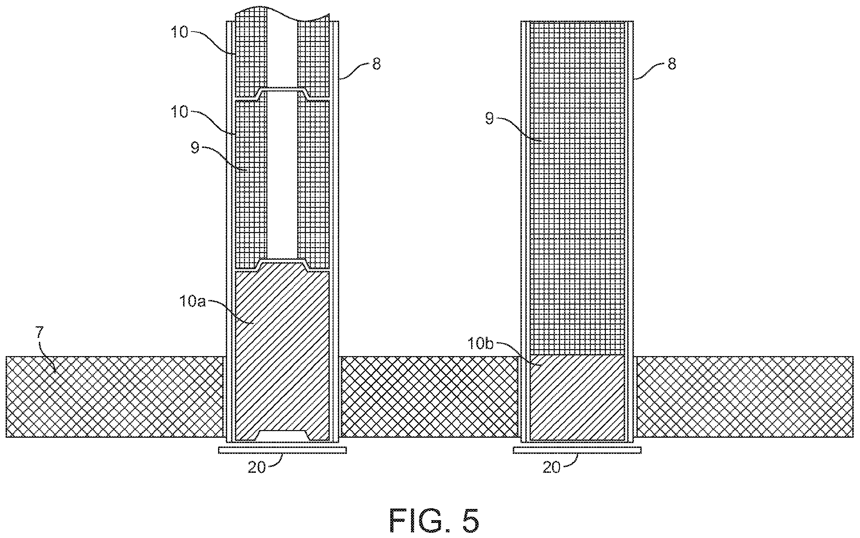

In a first example, as shown in Figure 2, the catalyst 9 may be packaged in a plurality of catalyst carriers 10. The catalyst carriers 10 may be arranged in a stacked arrangement of catalyst carriers 10 in the bore 11 of each reactor tube 8. One or more supporting devices 10a may be provided at bottom of the stacked arrangement. The supporting device(s) 10a may not contain catalyst 9 and may serve to avoid catalyst 9 being held in the tubular reactor 1 at the level of the lower tube sheet 7, as shown in Figure 5. In other words the supporting device(s) 10a may help to ensure that all of the catalyst 9 is positioned within the heat exchange zone 4 of the tubular reactor 1.

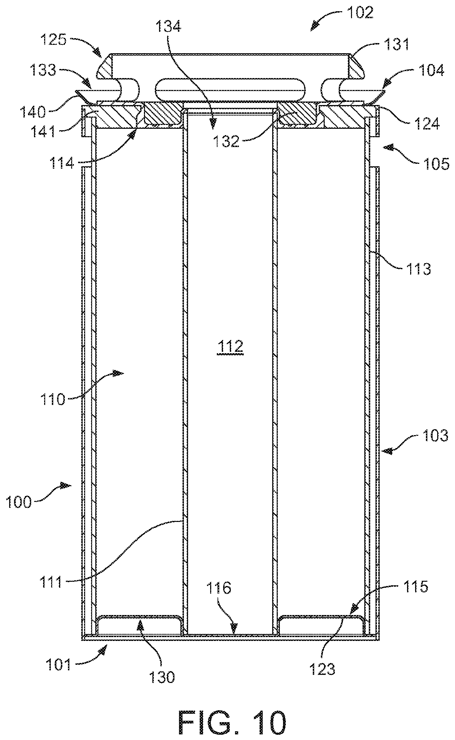

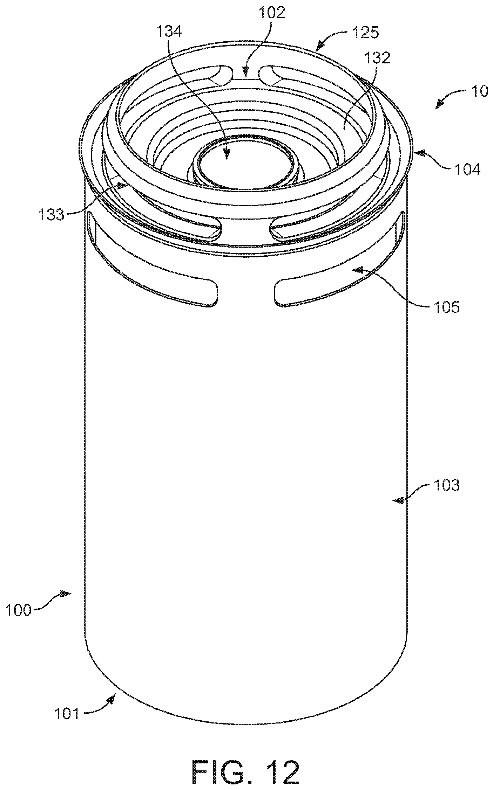

The catalyst carriers 10 may take a variety of different forms. Suitable examples include those described in WO 2011/048361, WO2012/136971 and WO2016/050520. Another example of a suitable catalyst carrier 10 is shown in Figures 10 to 12 and will be described further below.

Each supporting device 10a may take any suitable form. In one example the supporting device 10a may take the same or a similar form to a catalyst carrier 10 but not be filled with catalyst 9.

In a second example, as shown in Figures 3 and 4, the catalyst 9 may be catalyst particles that are filled loose into the bore 11 of each reactor tube 8. One or more supporting devices 10b may be provided at bottom of the bed of particulate catalyst 9 as shown in Figure 4. As above, the supporting device(s) 10b may serve to prevent catalyst 9 being held in the tubular reactor 1 at the level of the lower tube sheet 7, as shown in Figure 5. The supporting device(s) 10b may, as a result, help to ensure that all of the catalyst 9 is positioned within the heat exchange zone 4 of the tubular reactor 1.

Each supporting device 10b may take any suitable form. In one example, the supporting device 10b may have a hollow or porous body with at least an upper mesh for supporting the particulate catalyst 9. In another example, the supporting device 10b may comprise an inert support material such as alumina balls which have a larger diameter than the particulate catalyst. The alumina balls may be graded in size to avoid loss of catalyst from the reactor tube 8. For example, for a particulate catalyst having a particle diameter of 3 mm the alumina balls may comprise a layer of 6 mm balls overlying a layer of 13 mm balls overlying a layer of 25 mm balls. In another example, the supporting device 10b may comprise one or more coiled springs which expand against the reactor tube wall and retain the particulate catalyst like a basket.

It is typically desired that the catalyst 9 or catalyst carriers 10 cover all or substantially all of the length of the reactor tube 8 between the upper tube sheet 6 and the lower tube sheet 7, i.e. that they cover all or substantially all of the length of the heat exchange zone 4.

Typically, the loose catalyst 9 or catalyst carriers 10 are loaded into the inlets 13 at the upper ends of the reactor tubes 8 when filling the reactor tubes 8 and discharged from the outlets 12 at the lower ends of the reactor tubes 8 when emptying the reactor tubes 8.

The head space 3 may provide access to an upper end of the reactor tubes 8 to allow loading of the catalyst 9 or catalyst carriers 10 into the reactor tubes 8. The footer space 5 may provide access to a lower end of the reactor tubes 8 to allow unloading of the catalyst 9 or catalyst carriers 10 from the reactor tubes 8.

According to the present disclosure and as shown, by way of example, in Figures 2 to 5, each reactor tube 8 has one or more retaining devices 20 associated with it. For example, a single retaining device 20 may control discharge of the catalyst 9 from each reactor tube 8. Alternatively, two, three, four or more retaining devices 20 may be associated with the outlet 12 of each reactor tube 8.

Each retaining device 20 is configured to be rotatable between a first position and a second position. In the first position the retaining device 20 at least partially obstructs the outlet 12 of the reactor tube 8 so as to retain the catalyst 9 within the bore 11. In the second position the outlet 12 is unobstructed sufficiently to permit discharge of the catalyst 9 out of the outlet 12.

The retaining device 20 is rotatable about an axis that is parallel to, and non-coincident with, a longitudinal axis of the elongate tube 8 that it is associated with.

The retaining device 20 may be positioned at or near the outlet 12 of the reactor tube 8. For example as shown in Figures 2 to 5 the retaining device 20 may, in its first position, extend partially or fully across the outlet 12 of the reactor tube 8.

The retaining device 20 may be mounted, directly or indirectly, to the reactor tube 8 and/or the lower tube sheet 7. For example, the retaining device 20 may be mounted to a stud bolt of the lower tube sheet 7.

Each retaining device 20 may be aligned at an interstice between two, optionally between three or four reactor tubes 8.

The retaining device 20 may be formed of any suitable material. Such material will generally be selected to withstand the operating conditions of the reactor. Generally, the retaining device 20 will be fabricated from carbon steel, aluminium, stainless steel, other alloys or any material able to withstand the reaction conditions.

The retaining device 20 may comprise a rotatable body that is rotatable between the first position and the second position. The rotatable body may comprise a central pivot about which the rotatable body is configured to rotate.

The rotatable body may comprise at least one obstructing portion and at least one non-obstructing portion arranged at different circumferential regions of the rotatable body.

In the first position the at least one obstructing portion may be configured to at least partially obstruct the outlet 12 and in the second position the at least one non-obstructing portion may be configured to align with the outlet 12.

Partial obstruction of the outlet 12 in the first position of the rotatable body may be utilised where the catalyst 9 is packaged in catalyst carriers 10 or where a supporting device 10a, 10b is used to support the catalyst carriers 10 or the bed of particulate catalyst 9, since the preferably rigid form of the catalyst carriers 10 and or supporting devices 10a, 10b can be effectively retained in the bore 11 by narrowing the aperture of the outlet 12.

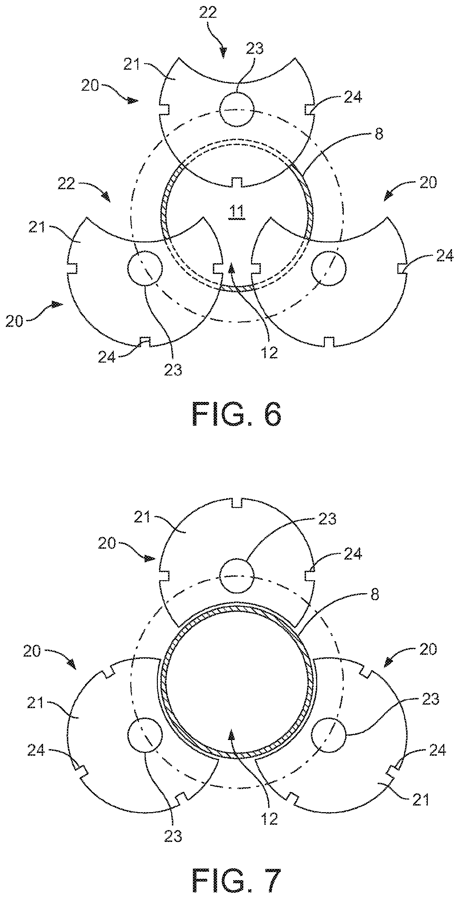

One example of the rotatable body is where it comprises a rotatable disc as shown, for example, in Figures 6 and 7. Figure 6 shows an end view of a single reactor tube 8 and three retaining devices 20 that are associated with the outlet 12 of the reactor tube 8.

The three retaining devices 20 may be distributed around the periphery of the reactor tube 8. They may optionally be arranged in an equi-spaced distribution. In the illustrated example, the three retaining devices 20 are about 120° apart from each other.

The rotatable disc may comprise a disc body 21, for example forming an obstructing portion, and at least one aperture 22, forming for example one or more non-obstructing portions. The disc body 21 may be planar. It may be formed, for example, from sheet material. The disc body 21 may have a thickness of 5 to 25 mm.

The disc body 21 may be rotatable about a pivot 23 which may be located at a centre of the disc body 21. The disc body 21 may be lune-shaped, i.e. having the general form of a concave-convex region bounded by two circular arcs.

In the illustrated example of Figures 6 and 7 one aperture 22 may be present on each retaining device 20. The aperture 22 may extend to a periphery of the disc body 21 to define a cut-out segment of the rotatable disc. The cut-out segment may be lens-shaped, i.e. having the general form of a convex region bounded by two circular arcs joined to each other at their endpoints.

The disc body 21 may be provided with one or more notches 24 at its peripheral edge. The notches 24 may provide an anchor point for engaging a tool to assist in rotating the disc body 21 from its first position to its second position.

Figure 6 shows all three retaining devices 20 in their first positions. In its first position each disc body 21 may be configured to at least partially obstruct the outlet 12. This enables retention of, for example, the catalyst carrier 10 within the bore 11. In particular, the position of the pivot 23 and the diameter of the disc body 21 may be configured such that in its first position at least a portion of the disc body 21 extends partly across the outlet 12, and in particular extends sufficiently to prevent passage of the catalyst carrier 10 past the level of the retaining device 20.

Figure 7 shows all three retaining devices 20 having been rotated into their second positions. In its second position the aperture 22 of each retaining device 20 may be aligned with the outlet 12. In particular, the alignment is such as to create a large enough window between the retaining devices 20 to allow passage of the catalyst carrier 10 past the level of the retaining device 20 and out of the reactor tube 8.

In practice the tubular reactor 1 comprises a large number of reactor tubes 8. The reactor tubes 8 are typically arranged in a regular array between the upper tube sheet 6 and the lower tube sheet 7. When viewed end-on, e.g. when viewing the lower tube sheet 7 from below, the reactor tubes 8 may be arranged in a regular pattern. The gaps between neighbouring reactor tube 8 may be constant and equal. The reactor tubes 8 may be arranged in a quadrilateral-based pattern, for example on a square pitch, in which the reactor tubes 8 form rows and columns and each reactor tube 8 has up to eight neighbouring reactor tubes 8. Alternatively, in another example, the reactor tubes 8 may be arranged on a triangular pitch in which the reactor tubes 8 are formed in triangular-subunits of three reactor tubes 8 and each reactor tube 8 has up to six neighbouring reactor tubes 8. It will be understood that other arrangements are possible.

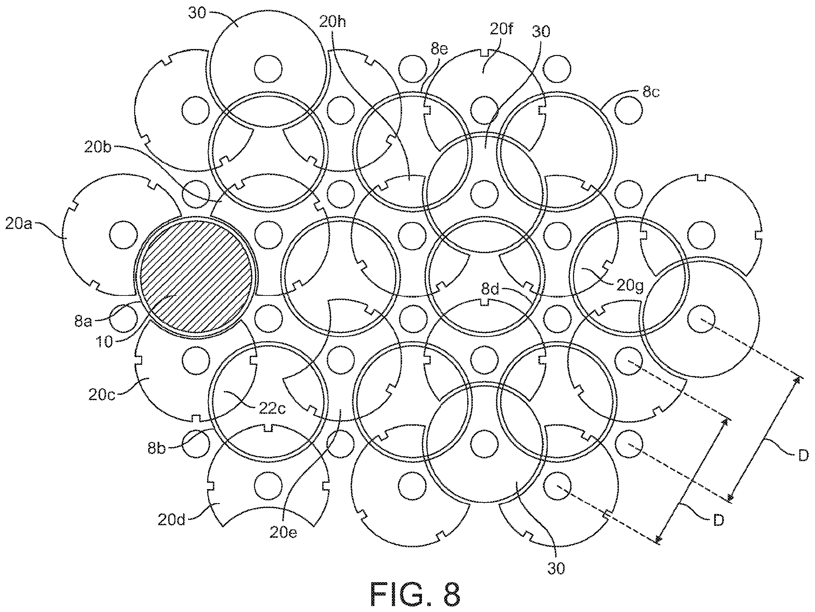

Figure 8 shows an end view of a portion of a tubular reactor 8 in which a plurality of reactor tubes 8 are arranged on a triangular pitch. Figure 8 illustrates how each retaining device 20 may be associated with more than one reactor tube 8. Each retaining device 20 is aligned at an interstice between three reactor tubes 8.

The reactor tubes 8 may be arranged in an equi-spaced regular pattern with each pair of reactor tubes 8 being separated by a centre-to-centre uniform distance, D and the retaining devices 20 may also arranged in an equi-spaced regular pattern with each pair of retaining devices 20 being separated by the centre-to-centre uniform distance, D. However, it will be noted, and as shown in Figure 8 by way of example, that the equi-spaced regular pattern of the retaining devices 20 is offset from the equi-spaced regular pattern of reactor tubes 8.

For example, as shown reactor tube 8a has three retaining devices 20a, 20b and 20c associated with it. Reactor tube 8b also has three retaining devices 20c, 20d and 20e associated with it. It will be noted that retaining device 20c is associated with both reactor tubes 8a and 8b.

As shown in Figure 8, reactor tube 8a is free to discharge its catalyst carriers 10 since the retaining devices 20a, 20b and 20c are all in their second position with respect to reactor tube 8a, i.e. their apertures are aligned with the outlet 12 of reactor tube 8a. At the same time retaining device 20c is in its first position with respect to reactor tube 8b because its disc body 22c partially obstructs the outlet 12 of reactor tube 8b.

Hence it can be seen that the retaining devices 20 may be selectively operated to control discharge of the catalyst from desired reactor tubes 8 by selective rotation of the retaining devices 20.

The retaining devices 20 may be configured to each be rotatable independently of each other. For example, each retaining device 20 may be manually rotated by an operator, for example by engaging a hand tool in the notches 24 of a particular retaining device 20.

Alternatively, two or more of the retaining devices 20 may be interlinked to be rotatable synchronously. For example, two of more retaining devices 20 may be interlinked by a link member. A single link member may rotate a group of retaining devices 20, for example some or all retaining devices 20 in a single row or column or in a single triangular sub-unit, may be rotated by operation of a single link member.

The tubular reactor 1 may further be provided with a plurality of locking elements 30 for selectively preventing rotation of the retaining devices 20. In the illustrated example of Figure 8, each locking element 30 may comprise a locking body that can be engaged against one or more retaining devices 20 to block rotation of said retaining devices 20. Each locking element 30 may be shaped and sized to inter-engage and or interlock with one or more of the retaining devices 20. For example, the shape of the locking element 30 may be shaped to interlock with the disc body 21 of one or more retaining devices 20. As illustrated in Figure 8, the locking element 30 may be a circular disc that may interlock with the disc bodies 21 of one, two or three neighbouring retaining devices 20, i.e. by occupying the voids of the apertures 22.

The locking elements 30 may be movable between a locked position and an unlocked position. The movement may be in a direction perpendicular to the plane of the retaining devices 20. For example, moving the locking elements 30 into their unlocked position may comprise raising or lowering the locking elements 30 out of the plane of the disc bodies 21.

The locking elements 30 may be interlinked to be moved synchronously.

The locking elements 30 may be arranged in an equi-spaced regular pattern.

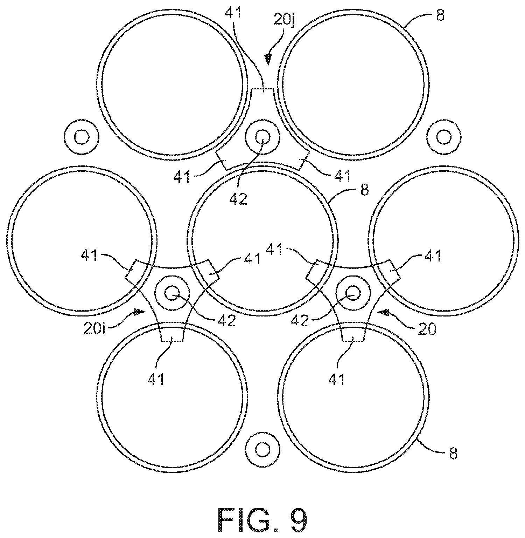

Another example of the rotatable body is where it comprises at least one arm or lobe as shown, for example, in Figure 9. Figure 9 shows an end view of a portion of a tubular reactor 8 in which the reactor tubes are arranged on a triangular pitch. Figure 9 illustrates how each retaining device 20 may be associated with more than one reactor tube 8.

Three retaining devices 20 may be distributed around the periphery of each reactor tube 8. They may optionally be arranged in an equi-spaced distribution. In the illustrated example the three retaining devices 20 are about 120° apart from each other.

As illustrated, each rotatable body comprises three arms or lobes 41. The three arms or lobes 41 may be about 120° apart from each other. The rotatable body may be rotatable about a pivot 42 which may be located at a centre of the rotatable body.

In other examples each rotatable body may comprise one, two, four or more arms or lobes 41. Optionally the number of arms or lobes 41 may equal the number of neighbouring reactor tubes 8 with which the rotatable body is associated. i.e. a rotatable body 8 located at an interstice between three reactor tubes 8 may have three arms or lobes 41.

As noted above, the retaining devices 20 may be mounted, directly or indirectly, to the lower tube sheet 7. As illustrated, the retaining devices 20 are mounted, by way of example to stud bolts comprising a part of a support framework coupled to the lower tube sheet 7.

Each retaining device 20 is configured to be rotatable between a first position and a second position. In the first position the or each arm or lobe 41 may be configured to at least partially obstruct an outlet 12 of a reactor tube 8 for retaining the catalyst 9 within the bore 11. In the second position the or each arm or lobe 41 may be configured to be non-aligned with the outlet 12.

In its first position the or each arm or lobe 41 may extend across one, two or more associated reactor tubes 8. The or each arm or lobe 41 may be straight or curved.

Figure 9 shows a retaining device 20i in its first position. In its first position each arm or lobe 41 may be configured to at least partially obstruct an outlet 12 of a neighbouring reactor tube 8. This enables retention of, the catalyst 9, the catalyst carrier 10, or supports 10a or 10b, within the bore 11. In particular, the position of the pivot 42 and the length of the arms or lobes 41 may be configured such that in its first position at least a distal portion of the arm or lobe 41 extends partly across the outlet 12, and in particular extends sufficiently to prevent passage of the catalyst carrier 10 or supports 10a or 10b past the level of the retaining device 20. In its first position, the arms or lobes 41 may therefore be configured to support an endmost one of the plurality of catalyst carriers 10. The support may be a direct support of the endmost one of the plurality of catalyst carriers 10 by contacting the endmost one of the plurality of catalyst carriers 10, or may be an indirect support of the endmost one of the plurality of catalyst carriers 10 by contacting a supporting device 10a that itself supports the endmost one of the plurality of catalyst carriers 10.

Figure 9 shows a retaining device 20j in its second position. In its second position the arms or lobes 41 are rotated out of alignment with the outlets 12 to allow passage of the catalyst 9 or catalyst carrier 10 past the level of the retaining device 20 and out of the reactor tube 8.

Hence, similar to the previous examples, it can be seen that the retaining devices 20 may be selectively operated to control discharge of the catalyst 9 from desired reactor tubes 8 by selective rotation of the retaining devices 20.

As before, the retaining devices 20 may be configured to each be rotatable independently of each other. For example, each retaining device 20 may be manually rotated by an operator. Alternatively, two or more of the retaining devices 20 may be interlinked to be rotatable synchronously. For example, two of more retaining devices 20 may be interlinked by a link member. A single link member may rotate a group of retaining devices 20, for example some or all retaining devices 20 in a single row or column or in a single triangular sub-unit, may be rotated by operation of a single link member.

In use, catalyst 9 (either loose or packaged in, for example, catalyst carriers 10) may be loaded into each reactor tube 8 of the tubular reactor 1 by rotating at least one retaining device 20 associated with that reactor tube 8 into its first position in which it at least partially obstructs the outlet 12. Then the catalyst 9 may be loaded into the reactor tube 8 such that it is retained and optionally supported by the retaining device 20. To unload the reactor tube 8, the retaining device 20 may be rotated into its second position in which the outlet 12 is sufficiently unobstructed so that the catalyst 9 is discharged out of the outlet 12. Where two of more retaining devices 20 are associated with a single reactor tube 8 then one or more or all of the associated retaining devices 20 may be moved into their first position before loading the catalyst 9.

Unloading of the reactor tubes 8 may be carried out one at a time by selectively rotating the retaining devices 20 to sufficiently unobstruct the outlet 12 of only one reactor tube 8 at a time. Alternatively, the reactor tubes 8 may be unloaded two or more at a time by selectively rotating the retaining devices 20 to sufficiently unobstruct the outlets 12 of two or more reactor tubes 8 at the same time.

As noted above, the catalyst 9 may be packaged in a catalyst carrier 10. An example of a suitable catalyst carrier 10 is shown, by way of example, in Figures 10 to 12. However, as already noted above, it will be understood that according to the present disclosure the catalyst carriers 10 may take various forms. For example, as well as the examples described herein the catalyst carriers 10 may take other forms including but not limited to those disclosed in WO2011/048361, WO2012/136971 and WO206/050520.

The catalyst carrier 10 may generally comprise a container that is sized such that it is of a smaller dimension than the internal dimension of the reactor tube 8 into which it is to be placed in use. Typically, a seal will be provided that is sized such that it interacts with the inner wall of the reactor tube 8 when the catalyst carrier 10 is in position within the reactor tube 8. Parameters such as carrier length and diameter may be selected to accommodate different reactions and configurations of reactor tube 8.

As shown in Figures 10 to 12, the catalyst carrier 10 may comprise a container 100 for holding catalyst in use. The container 100 may generally have a bottom surface 101 that closes a lower end of the container 100 and a top surface 102 at an upper end of the container 100. A carrier outer wall 103 may extend from the bottom surface 101 to the top surface 102. A seal 104 may extend from the container 100 by a distance which extends beyond the carrier outer wall 103. The carrier outer wall 103 may have apertures 105 located below the seal 104.

As shown in Figure 10, in at least some embodiments the catalyst carrier 10 may more particularly comprise an annular container 110 for holding catalyst in use. The annular container 110 may comprise a perforated inner container wall 111 that defines an inner channel 112 and a perforated outer container wall 113 that may be concentrically arranged about the perforated inner container wall 111. An annular top surface 114 may close an upper end of the annular container 110 and an annular bottom surface 115 may close a lower end of the annular container 110. A lower end of the inner channel 112 may be closed off by a channel end surface 116 except for one or more drain apertures (not shown) that may be provided in the lower end of the inner channel 112. The channel end surface 116 may be formed integrally or separately to the inner container wall 111.

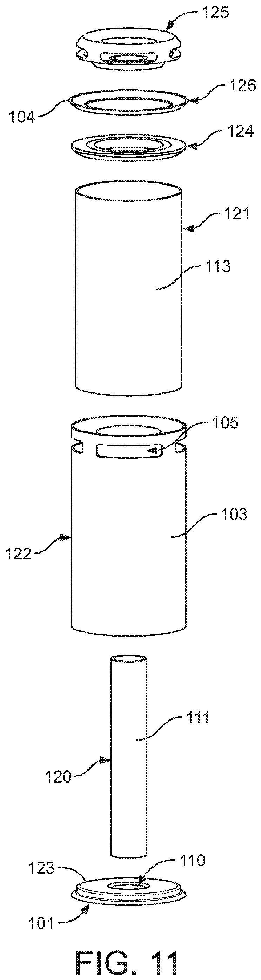

As shown in the exploded view of Figure 11, the catalyst carrier 10 may be formed from a number of individual components that may be assembled together by any suitable means, including for example welding. In some embodiments such components may include a perforated inner tube 120, a perforated intermediate tube 121, an outer tube 122, a bottom cap 123, an annular top ring 124, a top cap 125 and an annular seal ring 126.

The catalyst carrier 10 may be formed of any suitable material. Such material will generally be selected to withstand the operating conditions of the reactor. Generally, the catalyst carrier will be fabricated from carbon steel, aluminium, stainless steel, other alloys or any material able to withstand the reaction conditions.

Suitable thicknesses for the components will be of the order of about 0.1 mm to about 1.0 mm, preferably of the order of about 0.3 mm to about 1.0 mm.

The perforated inner tube 120 may comprise the perforated inner container wall 111. The perforated intermediate tube 121 may comprise the perforated outer container wall 113. The outer tube 122 may comprise the carrier outer wall 103 and define the apertures 105. The bottom cap 123 may comprise the bottom surface 101 and or the annular bottom surface 115. The bottom cap 123 may also extend across the perforated inner tube 120 to comprise the channel end surface 116. The annular top ring 124 and the top cap 125 may comprise the annular top surface 114 and may comprise at least part of the top surface 102. The annular seal ring 126 may comprise the seal 104.

The size of the perforations in the perforated inner tube 120 and the perforated intermediate tube 121 will be selected such as to allow uniform flow of reactant(s) and product(s) through the catalyst while maintaining the catalyst within the annular container 110. It will therefore be understood that their size will depend on the size of the catalyst particles being used. In an alternative arrangement the perforations may be sized such that they are larger but have a filter mesh covering the perforations to ensure catalyst is maintained within the annular container 110.

It will be understood that the perforations may be of any suitable configuration. Indeed where a wall or tube is described as perforated all that is required is that there is means to allow the reactants and products to pass through the walls or tubes.

The bottom surface 101, for example the bottom cap 123, may be shaped to engage with an upper end of another catalyst carrier 10. For example the bottom surface 101 may comprise an annular recess 130 around the perforated inner tube 120. The top cap 125 may be shaped to engage in the annular recess 130 of another catalyst carrier 10. For example the top cap 125 may comprise an annular ring 131 that upstands from an annular plug body 132. The annular ring 131 may be shaped and sized to be received in the annular recess 130.

The bottom surface 101, for example the bottom cap 123 and or channel end surface 116 may include one or more drain holes. Where one or more drain holes are present, they may be covered by a filter mesh.

The annular top ring 124 may be shaped and sized to engage in an upper end of the outer tube 122. The annular plug body 132 of the top cap 125 may have an outer diameter configured to engage with a central aperture of the annular top ring 124. Engagement of the top cap 125 with the annular top ring 124 may function to sandwich and retain the annular seal ring 126 in position.

The top cap 125 may comprise a central inlet 134 in the annular plug body 132 for enabling entry of liquids and gases into the upper end of the inner channel 112. The annular ring 131 may comprise lateral apertures 133 than enable liquids and gases to reach the central inlet 134.

The carrier outer wall 103 may be smooth or it may be shaped. Suitable shapes include pleats, corrugations, and the like.

The apertures 105 in the carrier outer wall 103 may be of any configuration. In some embodiments, the apertures 105 may be holes or slots.

The seal 104 may be formed in any suitable manner. However, it will generally be sufficiently compressible to accommodate the smallest diameter of the reactor tube 8. The seal 104 will generally be a flexible, sliding seal. In some embodiments the seal 104 may comprise a deformable flange 140 extending from the carrier outer wall 103 or the top surface 102 of the catalyst carrier 10. The flange 140 may be sized to be larger than the internal diameter of the reactor tube 8 such that as the catalyst carrier 10 is inserted into the reactor tube 8 it is deformed to fit inside and interact with the reactor tube 8.

In the illustrated example of Figure 10, the deformable flange 140 comprises an outer portion of the annular seal ring 126. An inner portion 141 of the annular seal ring 126 may define a clamping surface that is sandwiched and retained between the top cap 125 and the annular top ring 124. The deformable flange 140 may be angled relative to the inner portion 141. The deformable flange 140 may be angled towards the upper end of the catalyst carrier 10.

The carrier outer wall 103 may continue above the seal 104. Thus the seal 104 may be located at the top of the catalyst carrier 10, optionally as part of the top surface 102, or it may be located at a suitable point on the carrier outer wall 103 provided that it is located above the apertures 105 in the carrier outer wall 103.

During insertion into the reactor tube 8, the seal 104 of the catalyst carrier 10 may sealingly engage with the inner surface of the reactor tube 8. In particular, engagement of the seal 104 against the reactor tube 8 may cause deformation of the seal 104.

The deformation of the seal 104 may produce resistive forces that may help to maintain the axial position of the catalyst carriers 10 within the reactor tube 8 after installation. In addition, the deformation of the seal 104 may be used to promote a liquid-tight and or gas-tight seal between the upper end of the catalyst carriers 10 and the inner surface of the reactor tube 8.

Once installed in the reactor tube 8, the catalyst carriers 10 may form a stacked arrangement, one on top of the other with their longitudinal axes aligned and coincident. As noted above, the stack of catalyst carriers 10 may be directly or indirectly supported by the retaining devices 20 when in their first positions.

In use in a tubular reactor 1 with downflow, reactant(s) flow downwardly through the reactor tube 8 and thus first contact the top surface 102 of the uppermost catalyst carrier 10 in the stacked formation. The seal 104 blocks the passage of the reactant(s) around the side of the catalyst carrier 10. Therefore, the top surface 102 directs the reactants inwardly through the lateral apertures 133 into the central inlet 134 at the upper end of the inner channel 112 within the inner container wall 111 defined by the perforated inner tube 120.

The reactant(s) then enters the annular container 110 through the perforated inner tube 120 and then passes radially through the catalyst bed towards the outer container wall 113 defined by the perforated intermediate tube 121. During this passage the reactant(s) contact the catalyst and reaction occurs to form product(s).

Unreacted reactant and product then flow out of the annular container 110 through the perforated intermediate tube 121. The carrier outer wall 103 defined by the outer tube 122 then directs reactant and product upwardly between the inner surface of the carrier outer wall 103 and the perforated intermediate tube 121 until they reach the apertures 105 in the carrier outer wall 103. They are then directed through the apertures 105 and flow downwardly between the outer surface of the carrier outer wall 103 and the inner surface of the reactor tube 8 where heat transfer takes place.

The unreacted reactants and products may then contact the top surface 102 of the underlying catalyst carrier 10 in the stacked formation and the process described above may repeat. This pattern may repeat as the reactant(s) and product(s) pass down the stacked formation until then are collected out of the lower end of the reactor tube 8.

Some of the products, especially liquid products may drain out of the inner channel 112 through the drain hole provided in the channel end surface 116 into the inner channel 112 of the underlying catalyst carrier 10. Such products may then continue to drain down the stacked formation of the catalyst carriers 10 and be collected out of the outlet 12 at the lower end of the reactor tubes 8.

## Claims

1. A reactor tube (8) for a tubular reactor (1) and a retaining device (20) associated with the reactor tube (8);
the reactor tube (8) in the form of an elongate tube defining a bore (11) for receiving in use a catalyst (9) and having an outlet (12) at one end of the bore (11) for discharging the catalyst (9) out of the bore (11);
the retaining device (20) being configured to be rotatable between a first position and a second position;
wherein in the first position the retaining device (20) at least partially obstructs the outlet (12) for retaining the catalyst (9) within the bore (11); and
in the second position the outlet (12) is unobstructed sufficiently for permitting discharge of the catalyst (9) out of the outlet (12),
wherein the retaining device (20) is rotatable about an axis (23) that is parallel to, and non-coincident with, a longitudinal axis of the elongate tube.

2. The reactor tube (8) and retaining device (20) of claim 1, wherein the retaining device (20) comprises a rotatable body that is rotatable between the first position and the second position.

3. The reactor tube (8) and retaining device (20) of claim 2, wherein the rotatable body comprises a rotatable disc.

4. The reactor tube (8) and retaining device (20) of claim 3, wherein the rotatable disc comprises a disc body (21) and at least one aperture (22);
wherein in the first position the disc body (21) is configured to at least partially obstruct the outlet (12) for retaining the catalyst (9) within the bore (11) and in the second position the at least one aperture (22) is configured to align with the outlet (12);
and optionally wherein the or each cut-out segment of the rotatable disc is lens-shaped and the disc body (21) is lune-shaped.

5. The reactor tube (8) and retaining device (20) of claim 2, wherein the rotatable body comprises an arm or lobe (41);
wherein in the first position the arm or lobe (41) is configured to at least partially obstruct the outlet (12) for retaining the catalyst (9) within the bore (11) and in the second position the arm or lobe (41) is configured to be non-aligned with the outlet (12).

6. The reactor tube (8) and retaining device (20) of any preceding claim, wherein the bore (11) is configured to receive in use the catalyst (9) in the form of a plurality of catalyst carriers (10) that contain the catalyst (9) and are insertable into the bore (11);
wherein in the first position the retaining device (20) at least partially obstructs the outlet (12) so as to retain the plurality of catalyst carriers (10) within the bore (11); and
in the second position the outlet (12) is unobstructed sufficiently so as to permit discharge of the plurality of catalyst carriers (10) out of the outlet (12).

7. A tubular reactor (1) comprising a plurality of reactor tubes (8) and a plurality of retaining devices (20);
each reactor tube (8) comprising an elongate tube defining a bore (11) for receiving in use a catalyst (9) and having an outlet (12) at one end of the bore (11) for discharging the catalyst (9) out of the bore (11);
each retaining device (20) being associated with one or more reactor tubes (8) and being configured to be rotatable between a first position and a second position;
wherein in its first position each retaining device (20) at least partially obstructs the outlet (12) of one, some or all of its one or more associated reactor tubes (8) for retaining the catalyst (9) within the bore (11) of one, some or all of its one or more associated reactor tubes (8); and
in its second position the outlet (12) of at least one of its one or more associated reactor tubes (8) is unobstructed sufficiently for permitting discharge of the catalyst (9) out of said outlet (12),
wherein each retaining device (20) is rotatable about an axis (23) that is parallel to, and non-coincident with, the longitudinal axes of the elongate tubes.

8. The tubular reactor (1) of claim 7, wherein each reactor tube (8) has two, three or four retaining devices (20) associated with its outlet (12).

9. The tubular reactor (1) of claim 7 or claim 8, wherein the plurality of retaining devices (20) are each rotatable independently of each other; or
wherein two or more of the plurality of retaining devices (20) are interlinked to be rotatable synchronously.

10. The tubular reactor (1) of any one of claims 7 to 9, wherein each retaining device (20) is aligned at an interstice between two, optionally between three or four reactor tubes (8).

11. The tubular reactor (1) of any one of claims 7 to 10, further comprising a tube sheet (7) supporting the plurality of reactor tubes (8);
wherein the plurality of retaining devices (20) are mounted to the tube sheet (7);
and optionally wherein the plurality of retaining devices (20) are mounted to stud bolts of the tube sheet.

12. The tubular reactor (1) of any one of claims 7 to 11, further comprising a plurality of locking elements (30) for selectively preventing rotation of the retaining devices (20);
and optionally wherein each locking element (30) comprises a locking body that can be engaged against one or more retaining devices (20) to block rotation of said retaining devices.

13. A method of loading and unloading catalyst (9) into and out of a reactor tube (8) of a tubular rector (1), the reactor tube (8) comprising an elongate tube defining a bore (11) for receiving a catalyst (9) and having an outlet (12) at one end of the bore (11) for discharging the catalyst (9) out of the bore (11), the method of loading comprising:
associating with the outlet (12) of the reactor tube (8) a retaining device (20) wherein the retaining device (20) is rotatable about an axis (23) that is parallel to, and non-coincident with, the longitudinal axis of the elongate tube;
rotating the retaining device (20) into a first position in which it at least partially obstructs the outlet (12);
loading the catalyst (9) into the reactor tube (8) such that it is retained and supported by the retaining device (20);
the method of unloading comprising:
rotating the retaining device (20) into a second position in which the outlet (12) is sufficiently unobstructed; and
discharging the catalyst (9) out of the outlet (12).

14. The method of claim 13, wherein two or more retaining devices (20) are associated with the outlet (12) of the reactor tube (8); and the method of loading comprises:
rotating each of the two or more retaining devices (20) into their first position in which they at least partially obstruct the outlet (12);
loading the catalyst (9) into the reactor tube (8) such that it is retained and supported by the retaining devices (20);
the method of unloading comprising:
rotating each of the two or more retaining devices (20) into their second position in which the outlet (12) is sufficiently unobstructed; and
discharging the catalyst (9) out of the outlet (12).

15. The method of claim 13 or claim 14, wherein the tubular reactor (1) comprises a plurality of reactor tubes (8) and a plurality of retaining devices (20); and the method of loading comprises:
rotating each retaining device (20) into its first position in which it at least partially obstructs the outlet (12) of at least one reactor tube (8);
loading the catalyst (9) into the reactor tubes (8) such that they are retained and supported by the retaining devices (20);
the method of unloading comprising:
rotating one or more of the retaining devices (20) into its second position such that the outlet (12) of at least one of the reactor tubes (8) is sufficiently unobstructed; and
discharging the catalyst (9) out of said outlet or outlets (12).

16. The method of claim 15, wherein the reactor tubes (8) are unloaded one at a time by selectively rotating the retaining devices (20) to sufficiently unobstruct the outlet (12) of only one reactor tube (8) at a time; or
wherein the reactor tubes (8) are unloaded two or more at a time by selectively rotating the retaining devices (20) to sufficiently unobstruct the outlets (12) of two or more reactor tubes (8) at the same time.

17. The method of any one of claims 13 to 16, wherein the catalyst (9) is loaded into each bore (11) by providing the catalyst (9) in a plurality of catalyst carriers (10) and loading the plurality of catalyst carriers (10) into each bore (11), or wherein the catalyst (9) is loaded into each bore (11) by filling loose catalyst particulate into each bore (11).

## Patentansprüche

1. Reaktorrohr (8) für einen Rohrreaktor (1) und mit dem Reaktorrohr (8) verbundene Haltevorrichtung (20);
wobei das Reaktorrohr (8) in der Form eines länglichen Rohrs, das eine Bohrung (11) zum Aufnehmen eines Katalysators (9) in Verwendung definiert, vorliegt und einen Auslass (12) an einem Ende der Bohrung (11) zum Entnehmen des Katalysators (9) aus der Bohrung (11) aufweist;
wobei die Haltevorrichtung (20) konfiguriert ist, um zwischen einer ersten Position und einer zweiten Position drehbar zu sein;
wobei die Haltevorrichtung (20) in der ersten Position den Auslass (12) zum Halten des Katalysators (9) innerhalb der Bohrung (11) mindestens teilweise versperrt; und
der Auslass (12) in der zweiten Position zum Ermöglichen einer Entnahme des Katalysators (9) aus dem Auslass (12) ausreichend frei ist,
wobei die Haltevorrichtung (20) um eine Achse (23) herum drehbar ist, die parallel zu einer Längsachse des länglichen Rohrs ist und nicht mit dieser zusammenfällt.

2. Reaktorrohr (8) und Haltevorrichtung (20) nach Anspruch 1, wobei die Haltevorrichtung (20) einen drehbaren Körper umfasst, der zwischen der ersten Position und der zweiten Position drehbar ist.

3. Reaktorrohr (8) und Haltevorrichtung (20) nach Anspruch 2, wobei der drehbare Körper eine drehbare Scheibe umfasst.

4. Reaktorrohr (8) und Haltevorrichtung (20) nach Anspruch 3, wobei die drehbare Scheibe einen Scheibenkörper (21) und mindestens eine Öffnung (22) umfasst;
wobei der Scheibenkörper (21) in der ersten Position konfiguriert ist, um den Auslass (12) zum Halten des Katalysators (9) innerhalb der Bohrung (11) mindestens teilweise zu versperren, und die mindestens eine Öffnung (22) in der zweiten Position konfiguriert ist, um sich mit dem Auslass (12) auszurichten;
und optional, wobei das oder jedes ausgeschnittene Segment der drehbaren Scheibe linsenförmig ist und der Scheibenkörper (21) mondsichelförmig ist.

5. Reaktorrohr (8) und Haltevorrichtung (20) nach Anspruch 2, wobei der drehbare Körper einen Arm oder Nocken (41) umfasst;
wobei der Arm oder Nocken (41) in der ersten Position konfiguriert ist, um den Auslass (12) zum Halten des Katalysators (9) innerhalb der Bohrung (11) mindestens teilweise zu versperren, und der Arm oder Nocken (41) in der zweiten Position konfiguriert ist, um mit dem Auslass (12) nicht ausgerichtet zu sein.

6. Reaktorrohr (8) und Haltevorrichtung (20) nach einem der vorstehenden Ansprüche, wobei die Bohrung (11) konfiguriert ist, um den Katalysator (9) in Verwendung in der Form einer Vielzahl von Katalysatorträgern (10) aufzunehmen, die den Katalysator (9) enthalten und in die Bohrung (11) einsetzbar sind;
wobei die Haltevorrichtung (20) den Auslass (12) in der ersten Position mindestens teilweise versperrt, um die Vielzahl von Katalysatorträgern (10) innerhalb der Bohrung (11) halten; und
der Auslass (12) in der zweiten Position ausreichend frei ist, um die Entnahme der Vielzahl von Katalysatorträgern (10) aus dem Auslass (12) zu ermöglichen.

7. Rohrreaktor (1), umfassend eine Vielzahl von Reaktorrohren (8) und eine Vielzahl von Haltevorrichtungen (20);
jedes Reaktorrohr (8) umfassend ein längliches Rohr, das eine Bohrung (11) zum Aufnehmen eines Katalysators (9) in Verwendung definiert und einen Auslass (12) an einem Ende der Bohrung (11) zum Entnehmen des Katalysators (9) aus der Bohrung (11) aufweist;
wobei jede Haltevorrichtung (20) mit einem oder mehreren Reaktorrohren (8) verbunden ist und konfiguriert ist, um zwischen einer ersten Position und einer zweiten Position drehbar zu sein;
wobei jede Haltevorrichtung (20) in ihrer ersten Position den Auslass (12) von einem, einigen oder allen ihres einen oder ihrer mehreren verbundenen Reaktorrohre (8) mindestens teilweise versperrt, um den Katalysator (9) innerhalb der Bohrung (11) von einem, einigen oder allen ihres einen oder ihrer mehreren verbundenen Reaktorrohre (8) halten; und
der Auslass (12) in ihrer zweiten Position mindestens eines ihres einen oder ihrer mehreren verbundenen Reaktorrohre (8) zum Ermöglichen der Entnahme des Katalysators (9) aus dem Auslass (12) ausreichend frei ist,
wobei jede Haltevorrichtung (20) um eine Achse (23) herum drehbar ist, die parallel zu den Längsachsen der länglichen Rohre ist und nicht mit diesen zusammenfällt.

8. Rohrreaktor (1) nach Anspruch 7, wobei jedes Reaktorrohr (8) zwei, drei oder vier mit seinem Auslass (12) verbundene Haltevorrichtungen (20) aufweist.

9. Rohrreaktor (1) nach Anspruch 7 oder 8, wobei die Vielzahl von Haltevorrichtungen (20) jeweils unabhängig voneinander drehbar sind; oder
wobei zwei oder mehr der Vielzahl von Haltevorrichtungen (20) miteinander verknüpft sind, um synchron drehbar zu sein.

10. Rohrreaktor (1) nach einem der Ansprüche 7 bis 9, wobei jede Haltevorrichtung (20) an einem Zwischenraum zwischen zwei, optional zwischen drei oder vier Reaktorrohren (8) ausgerichtet ist.

11. Rohrreaktor (1) nach einem der Ansprüche 7 bis 10, ferner umfassend eine Rohrplatte (7), die die Vielzahl von Reaktorrohren (8) trägt;
wobei die Vielzahl von Haltevorrichtungen (20) an der Rohrplatte (7) montiert sind;
und optional, wobei die Vielzahl von Haltevorrichtungen (20) an Stehbolzen der Rohrplatte montiert sind.

12. Rohrreaktor (1) nach einem der Ansprüche 7 bis 11, ferner umfassend eine Vielzahl von Verriegelungselementen (30) zum selektiven Verhindern einer Drehung der Haltevorrichtungen (20);
und optional, wobei jedes Verriegelungselement (30) einen Verriegelungskörper umfasst, der gegen eine oder mehrere Haltevorrichtungen (20) in Eingriff gebracht werden kann, um die Drehung der Haltevorrichtungen zu blockieren.

13. Verfahren zum Laden und Entladen des Katalysators (9) in ein und aus einem Reaktorrohr (8) eines Rohrreaktors (1), das Reaktorrohr (8) umfassend ein längliches Rohr, das eine Bohrung (11) zum Aufnehmen eines Katalysators (9) definiert und einen Auslass (12) an einem Ende der Bohrung (11) zum Entnehmen des Katalysators (9) aus der Bohrung (11) aufweist, das Verfahren zum Laden umfassend:
Verbinden einer Haltevorrichtung (20) mit dem Auslass (12) des Reaktorrohrs (8), wobei die Haltevorrichtung (20) um eine Achse (23) herum drehbar ist, die parallel zu der Längsachse des länglichen Rohrs und mit dieser nicht zusammenfällt;
Drehen der Haltevorrichtung (20) in eine erste Position, in der sie den Auslass (12) mindestens teilweise versperrt;
derartiges Laden des Katalysators (9) in das Reaktorrohr (8), dass er durch die Haltevorrichtung (20) gehalten und gestützt wird;
das Verfahren zum Entladen umfassend:
Drehen der Haltevorrichtung (20) in eine zweite Position, in der der Auslass (12) ausreichend frei ist; und
Entnehmen des Katalysators (9) aus dem Auslass (12).

14. Verfahren nach Anspruch 13, wobei zwei oder mehr Haltevorrichtungen (20) mit dem Auslass (12) des Reaktorrohrs (8) verbunden sind; und das Verfahren zum Laden umfasst:
Drehen jeder der zwei oder mehr Haltevorrichtungen (20) in ihre erste Position, in der sie den Auslass (12) mindestens teilweise versperren;
derartiges Laden des Katalysators (9) in das Reaktorrohr (8), dass er durch die Haltevorrichtungen (20) gehalten und gestützt wird;
das Verfahren zum Entladen umfassend:
Drehen jeder der zwei oder mehr Haltevorrichtungen (20) in ihre zweite Position, in der der Auslass (12) ausreichend frei ist; und
Entnehmen des Katalysators (9) aus dem Auslass (12).

15. Verfahren nach Anspruch 13 oder 14, wobei der Rohrreaktor (1) eine Vielzahl von Reaktorrohren (8) und eine Vielzahl von Haltevorrichtungen (20) umfasst; und das Verfahren zum Laden umfasst:
Drehen jeder Haltevorrichtung (20) in ihre erste Position, in der sie den Auslass (12) mindestens eines Reaktorrohrs (8) mindestens teilweise versperrt;
derartiges Laden des Katalysators (9) in die Reaktorrohre (8), dass sie durch die Haltevorrichtungen (20) gehalten und gestützt werden;
das Verfahren zum Entladen umfassend:
derartiges Drehen einer oder mehrerer der Haltevorrichtungen (20) in ihre zweite Position, dass der Auslass (12) mindestens eines der Reaktorrohre (8) ausreichend frei ist; und
Entnehmen des Katalysators (9) aus dem Auslass oder den Auslässen (12).

16. Verfahren nach Anspruch 15, wobei die Reaktorrohre (8) durch selektives Drehen der Haltevorrichtungen (20) jeweils einzeln entladen werden, um den Auslass (12) von jeweils nur einem Reaktorrohr (8) ausreichend freizugeben; oder
wobei jeweils zwei oder mehr der Reaktorrohre (8) durch selektives Drehen der Haltevorrichtungen (20) entladen werden, um die Auslässe (12) von zwei oder mehr Reaktorrohren (8) gleichzeitig ausreichend freizugeben.

17. Verfahren nach einem der Ansprüche 13 bis 16, wobei der Katalysator (9) in jede Bohrung (11) durch Bereitstellen des Katalysators (9) in einer Vielzahl von Katalysatorträgern (10) und Laden der Vielzahl von Katalysatorträgern (10) in jede Bohrung (11) geladen wird, oder wobei der Katalysator (9) in jede Bohrung (11) durch Füllen von losen Katalysatorpartikeln in jede Bohrung (11) geladen wird.

## Revendications

1. Tube de réacteur (8) destiné à un réacteur tubulaire (1) et dispositif de retenue (20) associé au tube de réacteur (8) ;
le tube de réacteur (8) sous la forme d'un tube allongé définissant un alésage (11) destiné à recevoir, en cours d'utilisation, un catalyseur (9) et ayant une sortie (12) au niveau d'une extrémité de l'alésage (11) destinée à évacuer le catalyseur (9) hors de l'alésage (11) ;
le dispositif de retenue (20) étant conçu pour pouvoir tourner entre une première position et une seconde position ;
dans lesquels, dans la première position, le dispositif de retenue (20) obstrue au moins partiellement la sortie (12) pour retenir le catalyseur (9) à l'intérieur de l'alésage (11) ; et
dans la seconde position, la sortie (12) est suffisamment dégagée pour permettre l'évacuation du catalyseur (9) hors de la sortie (12),
dans lesquels le dispositif de retenue (20) peut tourner autour d'un axe (23) qui est parallèle à, et ne coïncide pas avec, un axe longitudinal du tube allongé.

2. Tube de réacteur (8) et dispositif de retenue (20) selon la revendication 1, dans lesquels le dispositif de retenue (20) comprend un corps rotatif qui peut tourner entre la première position et la seconde position.

3. Tube de réacteur (8) et dispositif de retenue (20) selon la revendication 2, dans lesquels le corps rotatif comprend un disque rotatif.

4. Tube de réacteur (8) et dispositif de retenue (20) selon la revendication 3, dans lesquels le disque rotatif comprend un corps de disque (21) et au moins une ouverture (22) ;
dans lesquels, dans la première position, le corps de disque (21) est conçu pour obstruer au moins partiellement la sortie (12) pour retenir le catalyseur (9) à l'intérieur de l'alésage (11) et, dans la seconde position, l'au moins une ouverture (22) est conçue pour s'aligner avec la sortie (12) ;
et optionnellement, dans lesquels le ou chaque segment de découpe du disque rotatif a la forme d'une lentille et le corps de disque (21) a la forme d'une lunule.

5. Tube de réacteur (8) et dispositif de retenue (20) selon la revendication 2, dans lesquels le corps rotatif comprend un bras ou un lobe (41) ;
dans lesquels, dans la première position, le bras ou le lobe (41) est conçu pour obstruer au moins partiellement la sortie (12) pour retenir le catalyseur (9) à l'intérieur de l'alésage (11) et, dans la seconde position, le bras ou le lobe (41) est conçu pour ne pas être aligné avec la sortie (12).

6. Tube de réacteur (8) et dispositif de retenue (20) selon l'une quelconque revendication précédente, dans lesquels l'alésage (11) est conçu pour recevoir, en cours d'utilisation, le catalyseur (9) sous la forme d'une pluralité de supports de catalyseur (10) qui contiennent le catalyseur (9) et peuvent être insérés dans l'alésage (11) ;
dans lesquels, dans la première position, le dispositif de retenue (20) obstrue au moins partiellement la sortie (12) afin de retenir la pluralité de supports de catalyseur (10) à l'intérieur de l'alésage (11) ; et
dans la seconde position, la sortie (12) est suffisamment dégagée afin de permettre l'évacuation de la pluralité de supports de catalyseur (10) hors de la sortie (12).

7. Réacteur tubulaire (1) comprenant une pluralité de tubes de réacteur (8) et une pluralité de dispositifs de retenue (20) ;
chaque tube de réacteur (8) comprenant un tube allongé définissant un alésage (11) destiné à recevoir, en cours d'utilisation, un catalyseur (9) et ayant une sortie (12) au niveau d'une extrémité de l'alésage (11) destinée à évacuer le catalyseur (9) hors de l'alésage (11) ;
chaque dispositif de retenue (20) étant associé à un ou plusieurs tubes de réacteur (8) et étant conçu pour pouvoir tourner entre une première position et une seconde position ;
dans lequel, dans sa première position, chaque dispositif de retenue (20) obstrue au moins partiellement la sortie (12) d'un, de certains ou de la totalité de son ou ses tubes de réacteur (8) associés pour retenir le catalyseur (9) à l'intérieur de l'alésage (11) d'un, de certains ou de la totalité de son ou ses tubes de réacteur (8) associés ; et
dans sa seconde position, la sortie (12) d'au moins l'un de son ou ses tubes de réacteur (8) associés est suffisamment dégagée pour permettre l'évacuation du catalyseur (9) hors de ladite sortie (12),
dans lequel chaque dispositif de retenue (20) peut tourner autour d'un axe (23) qui est parallèle à, et ne coïncide pas avec, les axes longitudinaux des tubes allongés.

8. Réacteur tubulaire (1) selon la revendication 7, dans lequel chaque tube de réacteur (8) a deux, trois ou quatre dispositifs de retenue (20) associés à sa sortie (12).

9. Réacteur tubulaire (1) selon la revendication 7 ou la revendication 8, dans lequel la pluralité de dispositifs de retenue (20) peuvent chacun tourner indépendamment les uns des autres ; ou
dans lequel deux ou plusieurs de la pluralité de dispositifs de retenue (20) sont raccordés entre eux pour pouvoir tourner de manière synchrone.

10. Réacteur tubulaire (1) selon l'une quelconque des revendications 7 à 9, dans lequel chaque dispositif de retenue (20) est aligné au niveau d'un interstice entre deux, optionnellement, entre trois ou quatre tubes de réacteur (8).

11. Réacteur tubulaire (1) selon l'une quelconque des revendications 7 à 10, comprenant en outre une plaque tubulaire (7) soutenant la pluralité de tubes de réacteur (8) ;
dans lequel la pluralité de dispositifs de retenue (20) sont montés sur la plaque tubulaire (7) ;
et optionnellement, dans lequel la pluralité de dispositifs de retenue (20) sont montés sur des goujons de la plaque tubulaire.

12. Réacteur tubulaire (1) selon l'une quelconque des revendications 7 à 11, comprenant en outre une pluralité d'éléments de blocage (30) destinés à empêcher sélectivement la rotation des dispositifs de retenue (20) ;
et optionnellement, dans lequel chaque élément de blocage (30) comprend un corps de blocage qui peut venir en prise contre un ou plusieurs dispositifs de retenue (20) afin de bloquer la rotation desdits dispositifs de retenue.

13. Procédé de chargement et de déchargement d'un catalyseur (9) dans et hors d'un tube de réacteur (8) d'un réacteur tubulaire (1), le tube de réacteur (8) comprenant un tube allongé définissant un alésage (11) destiné à recevoir un catalyseur (9) et ayant une sortie (12) au niveau d'une extrémité de l'alésage (11) destinée à évacuer le catalyseur (9) hors de l'alésage (11), le procédé de chargement comprenant :
l'association, à la sortie (12) du tube de réacteur (8), d'un dispositif de retenue (20), dans lequel le dispositif de retenue (20) peut tourner autour d'un axe (23) qui est parallèle à, et ne coïncide pas avec, un axe longitudinal du tube allongé ;
la rotation du dispositif de retenue (20) dans une première position dans laquelle il obstrue au moins partiellement la sortie (12) ;
le chargement du catalyseur (9) dans le tube de réacteur (8) de telle sorte qu'il soit retenu et soutenu par le dispositif de retenue (20) ;
le procédé de déchargement comprenant :
la rotation du dispositif de retenue (20) dans une seconde position dans laquelle la sortie (12) est suffisamment dégagée ; et
le déchargement du catalyseur (9) hors de la sortie (12).

14. Procédé selon la revendication 13, dans lequel deux ou plusieurs dispositifs de retenue (20) sont associés à la sortie (12) du tube de réacteur (8) ; et le procédé de chargement comprend :
la rotation de chacun des deux ou plusieurs dispositifs de retenue (20) dans leur première position dans laquelle ils obstruent au moins partiellement la sortie (12) ;
le chargement du catalyseur (9) dans le tube de réacteur (8) de telle sorte qu'il soit retenu et soutenu par les dispositifs de retenue (20) ;
le procédé de déchargement comprenant :
la rotation de chacun des deux ou plusieurs dispositifs de retenue (20) dans leur seconde position dans laquelle la sortie (12) est suffisamment dégagée ; et
le déchargement du catalyseur (9) hors de la sortie (12).

15. Procédé selon la revendication 13 ou la revendication 14, dans lequel le réacteur tubulaire (1) comprend une pluralité de tubes de réacteur (8) et une pluralité de dispositifs de retenue (20) ; et le procédé de chargement comprend :
la rotation de chaque dispositif de retenue (20) dans sa première position dans laquelle il obstrue au moins partiellement la sortie (12) d'au moins un tube de réacteur (8) ;
le chargement du catalyseur (9) dans les tubes de réacteur (8) de telle sorte qu'ils soient maintenus et soutenus par les dispositifs de retenue (20) ;
le procédé de déchargement comprenant :
la rotation de l'un ou plusieurs des dispositifs de retenue (20) dans sa seconde position de sorte que la sortie (12) d'au moins l'un des tubes de réacteur (8) soit suffisamment dégagée ; et
le déchargement du catalyseur (9) hors de ladite ou desdites sorties (12).

16. Procédé selon la revendication 15, dans lequel les tubes de réacteur (8) sont déchargés un à la fois en faisant tourner sélectivement les dispositifs de retenue (20) afin de dégager suffisamment la sortie (12) d'un seul tube de réacteur (8) à la fois ; ou
dans lequel les tubes de réacteur (8) sont déchargés deux ou plus à la fois en faisant tourner sélectivement les dispositifs de retenue (20) afin de dégager suffisamment les sorties (12) de deux ou plusieurs tubes de réacteur (8) en même temps.

17. Procédé selon l'une quelconque des revendications 13 à 16, dans lequel le catalyseur (9) est chargé dans chaque alésage (11) en fournissant le catalyseur (9) dans une pluralité de supports de catalyseur (10) et en chargeant la pluralité de supports de catalyseur (10) dans chaque alésage (11), ou dans lequel le catalyseur (9) est chargé dans chaque alésage (11) en remplissant chaque alésage (11) de particules de catalyseur en vrac.
